Europäisches Patentamt

European Patent Office

Office européen des brevets

(11) Veröffentlichungsnummer: **0 482 225 A1**

## EUROPÄISCHE PATENTANMELDUNG

(21) Anmeldenummer: **90120219.2**

(22) Anmeldetag: **22.10.90**

(51) Int. Cl.5: **H01S 3/03**

(43) Veröffentlichungstag der Anmeldung:
**29.04.92 Patentblatt 92/18**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Folie, Friedrich**
**Murnauerstrasse 252**
**W-8000 München 70(DE)**
Erfinder: **Fritzsche, Helmut**
**Kapellenstrasse 41**
**W-8031 Alling(DE)**
Erfinder: **Huber, Wilhelm**
**Am Bach 44**
**W-8055 Goldach(DE)**

(54) **Wellenleiterlaser.**

(57) In einem Wellenleiterlaser, welcher für Impulsbetrieb bestimmt ist, werden ein oder mehrere Druckausgleichsgefäße 7 vorgesehen, die über Ausgleichsleitungen 4 mit dem Entladungsraum 3 an Stellen verbunden sind, an denen beim Impulsbetrieb im Fall von mechanischen bzw. akustischen Resonanzschwingungen im Entladungsraum(3) Bäuche des Gasdruckes auftreten.

Für Impulsbetrieb bestimmte Wellenleiterlaser, insbesondere $CO_2$-Wellenleiterlaser.

FIG 3

EP 0 482 225 A1

Die vorliegende Erfindung betrifft einen Wellenleiterlaser nach dem Oberbegriff des Patentanspruchs 1. Ein derartiger Wellenleiterlaser ist aus der DE-OS 37 00 294 bekannt. Er besitzt ein Gasvorratsgefäß, welches mit dem Entladungsraum über Rohrleitungen verbunden ist.

Die Aufgabe, die der vorliegenden Erfindung zugrundeliegt, besteht darin, einen derartigen Laser für Impulsbetrieb geeignet zu gestalten und hohe Impulsfrequenzen zu ermöglichen. Diese Aufgabe wird bei einem Laser gemäß dem Oberbegriff durch die kennzeichnenden Merkmale des Patentanspruchs 1 gelöst.

Der Erfindung liegt die Erkenntnis zugrunde, daß eine Erhöhung des Druckes im Laser, auch wenn sie nur lokal erfolgt, die Laserleistung heruntersetzt oder bei entsprechender Druckdifferenz vollständig verschwinden läßt. Eine hierfür ausreichende Druckdifferenz stellt sich gemäß einer Erkenntnis, die der Erfindung zugrundeliegt, bereits bei einem Impulsbetrieb ein, welcher noch im Bereich der thermischen Belastbarkeit des Lasers liegt und schränkt somit den Einsatzbereich derartiger Laser beträchtlich ein. Dabei ist es nicht erforderlich, daß Ausgleichsleitungen in jedem Druckbauch einer stehenden Welle angebracht sind, vielmehr werden auch die nicht unmittelbar im Bereich einer Ausgleichsleitung liegenden Druckbäuche abgeflacht. Durch die Abstände der Ausgleichsleistungen können verschiedene Frequenzen der Plasmaschwingungen unterdrückt werden, wobei verschiedene Abstände im gleichen Laser auch verschiedene Frequenzen unterdrücken.

Eine vorteilhafte Ausführung der Erfindung weist ein Druckausgleichsgefäß mit zwei oder mehr Ausgleichsleitungen auf. Dabei münden die Ausgleichsleitungen vorteilhaft an verschiedenen Druckbäuchen von zu erwartenden stehenden Wellen in den Entladungskanal ein. Sind die verschie- denen Druckbäuche derselben Wellenlänge zuzu- schreiben, so verstärkt sich die Unterdrückung dieser einen Welle. Sind die verschiedenen Druckbäu- che dagegen verschiedenen Wellenlängen zuzu- schreiben, so werden die verschiedenen Wellenlängen abgeschwächt bzw. unterdrückt. Dieser Fall ist insbesondere für den Einsatz mit unterschiedlichen Impulsfrequenzen von Interesse. In einer vorteilhaften Ausführungsform ist das Vorratsgefäß als Druckausgleichsgefäß ausgebildet. Daneben können auch zwei oder mehr Druckausgleichsgefäße vorgesehen sein, wobei jedes von diesen über nur eine Ausgleichsleitung mit dem Entladungskanal verbunden ist. Diese Ausführungsform ermöglicht eine relativ einfache, mechanisch feste Ausbildung der Ausgleichsleitungen, da thermische Spannungen zwischen dem Laserrohr und dem Ausgleichsgefäß grundsätzlich ausgeschlossen sind. Sollen dagegen mehrere Ausgleichsleitungen mit einem Druckausgleichsgefäß verbunden sein, wobei als Druckausgleichsgefäß auch das Vorratsgefäß dienen kann, so ist es vorteilhaft, wenn ein Teil jeder der Ausgleichsleitung verformbar gestaltet ist und wenn die Verformbarkeit eine die Laserleistung störende Verbiegung der Kapillare bei den zu erwartenden Temperaturänderungen vermeidet. Hierzu umfaßt die Ausgleichsleitung vorteilhaft einen Faltenbalg oder sie ist aus einem duktilen Material, insbesondere Kupfer hergestellt und besitzt eine geringe Wandstärke.

Eine kompakte Ausführungsform ist gegeben, indem der Entladungskanal in einem Laserrohr mit einem im wesentlichen rechteckförmigen Profil untergebracht ist, indem an das Laserrohr im Bereich des Entladungskanals beidseitig einander gegenüberliegende Kühlkanäle angrenzen, indem die Berührungsflächen zwischen den Kühlkanälen und dem Laserrohr den Entladungskanal beidseitig überragen und indem noch im Laserrohr Ausgleichsleitungen und daran angrenzend ein oder mehrere Ausgleichsgefäße untergebracht sind. Diese Ausführungsform ermöglicht auch die Anbringung mehrerer Ausgleichsleitungen, ohne daß auf duktiles Material oder dergleichen zurückgegriffen werden müßte. Vielmehr gewährleistet der kompakte Aufbau eine so hohen Temperaturausgleich innerhalb des Laserrohres, daß unzulässige Verbiegungen nicht auftreten. Für höhere Leistungen ist dagegen eine Ausführungsform vorteilhaft, in der der Entladungskanal in einem Laserrohr mit einem im wesentlichen rechteckförmigen Profil untergebracht ist, in der an dieses Laserrohr einander gegenüberliegende Kühlrohre angrenzen, und Berührungsflächen zum Laserrohr bilden, die den Entladungskanal beidseitig überragen, in der im Laserrohr Ausgleichsleitungen untergebracht sind und an das Laserrohr angrenzend ein oder mehrere Druck- ausgleichsgefäße angeordnet sind, welche Öffnun- gen enthalten, die mit den Ausgleichsleitungen in Verbindung stehen und gegenüber der Umgebung vakuumdicht abgeschlossen sind.

Vorteilhaft ist der Entladungskanal rechteckförmig oder quadratisch gestaltet, wobei die Ausgleichsleitungen an einer Seitenwand des Entladungskanals eingesetzt sind und wobei die Begrenzung der Ausgleichsleitung nicht bis an den Rand dieser Seitenwand heranreicht. Durch diese Ausführungsform wird die Störung der Laserintensität durch die Ausgleichsleitung klein gehalten. Bei einer vollständigen Überdeckung der Seitenwand durch die Öffnung der Ausgangsleitung entstünden bereits erheblich größere Verluste bei der Wellenleitung im das Laserrohr.

Eine gute Unterdrückung der zu erwartenden Schwingungen ist durch eine Ausführungsform gegeben, in der auf je etwa 80mm Länge eine Ausgleichsleitung angebracht ist, wenn der Laser für einen Betriebsdruck von etwa 110mbar vorgesehen ist.

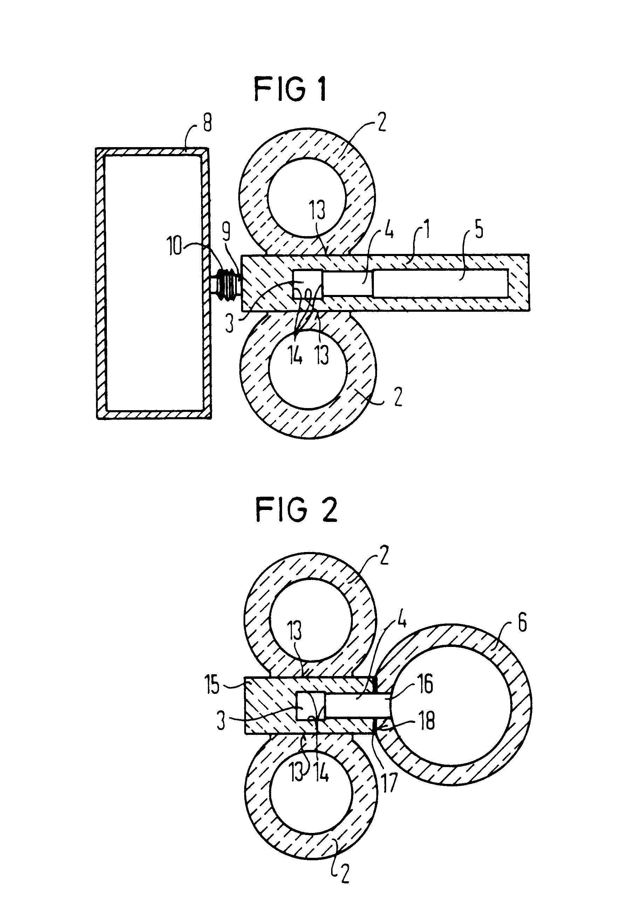

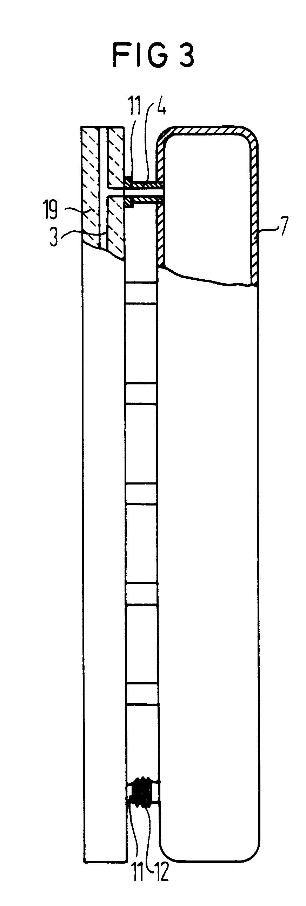

Die Erfindung wird nun anhand von drei Figuren näher erläutert. Sie ist nicht auf die in den Figuren gezeigten Beispiele beschränkt. Die FIG 1 und 3 zeigen Querschnitte und die FIG 2 einen Längsschnitt durch die Kapillare und ein Druckausgleichsgefäß eines erfindugnsgemäßen Lasers.

Gemäß FIG 1 ist in einem Laserrohr 1, welches vorzugsweise aus Keramik besteht, ein Entladungskanal 3 über Ausgleichsleitungen 4 mit einem oder mehreren Druckausgleichsgefäßen 5 verbunden. Da diese Gefäße im gleichen Profil untergegracht sind, besteht ein enger Temperaturaustausch, die Gefahr der Verbiegung infolge von Temperaturunterschieden ist ausreichend gering. Zusätzlich wird durch im Bereich des Entladungskanals 3 auf einander gegenüberliegenden Seiten des Laserrohres 1 angebrachte Kühlrohre 2 eine Kühlung dort erreicht, wo die Wärme entsteht. Die Verbindungsflächen 13 zwischen den Kühlrohren 2 und dem Laserrohr 1 überragen den Entladungskanal 3 in beiden Richtungen, so daß sich eine gleichmäßige Kühlung ergibt. Der Entladungskanal 3 weist einen quadratischen Querschnitt mit Seitenflächen 14 auf. An eine der Seitenflächen 14 setzen die Ausgleichsleitungen 4 an. Sie füllen die Seitenfläche 14 im Schnittbild der FIG 1 nicht voll aus. Dadurch ist eine starke Beeinträchtigung der Wellenleitereigenschaften des Entladungskanals 3 vermieden. Die Ausgleichsgefäße 5 können über mehrere Ausgleichsleitungen 4 mit dem Entladungskanal 3 verbunden sein. Insbesondere kann auch ein einziges, durchgehendes Ausgleichsgefäß 5 vorgesehen sein, da durch das durchgehende Profil ein schneller Temperaturausgleich möglich und eine Verbiegung auch bei Temperaturschwankungen vermieden ist. Das Ausgleichsgefäß 5 hat einen über fünfmal so großen Querschnitt wie der Entladungskanal 3, wodurch ein ausreichender Druckausgleich gewährleistet ist.

Zusätzlich zu den Ausgleichsgefäßen 5 ist an den Entladungskanal 14 ein Vorratsgefäß 8 angeschlossen, welches über zumindest zwei Rohrleitungen 9 mit zwischengeschalteten Faltenbalgen 10 mit dem Laserrohr 1 verbunden ist. Die Rohrleitungen 9 können im Bereich von Druckbäuchen von zu erwartenden Schwingungen am Entladungskanal 3 ansetzen, wodurch das Vorratsgefäß 8 zusätzlich als Druckausgleichsgefäß wirkt.

In der Ausführungsform gemäß FIG 2 ist zumindest ein Druckausgleichsgefäß 6 an ein Laserrohr 15 angrenzend angeordnet, wobei Ausgleichsleitungen 4 mit Ausnehmungen 16 des Druckausgleichsgefäßes 6 in Verbindung stehen und den Gasfluß zwischen dem Entladungskanal 3 und dem Druckausgleichsgefäß 6 gewährleisten. Das Druckausgleichsgefäß 6 besteht in einer kostengünstigen Ausführung aus Glas und ist mittels Glaslot 17 mit dem aus Keramik bestehenden Laserrohr 15 vakuumdicht verlötet. Kühlrohre 2 liegen wiederum im Bereich des Entladungskanals 3 einander gegenüber und überdecken den Entladungskanal 3 mit ihren Verbindungsflächen 13, die an das Laserrohr 15 angrenzen. In dieser Ausführungsform kann ein Vorratsgefäß entfallen, da die Druckausgleichsgefäße 6 bereits mit einem ausreichend großen Volumen ausgeführt sein können. Bei starken zu erwartenden Temperaturschwankungen wird vorteilhaft das Ausgleichsgefäß 6 an nur einer räumlich begrenzten Stelle mit Glaslot 17 an das Laserrohr 15 angeglast. Dabei ist zweckmäßig die Verbindungsfläche 18 zwischen dem Druckausgleichsgefäß 6 und dem Laserrohr 15 so klein wie möglich gehalten, so daß einerseits eine Halterung des Vorratsgefäßes 6 am Laserrohr 15 gewährleistet ist und andererseits auch bei schnellen Temperaturschwankungen keine störende Verformung des Laserrohres 15 durch Temperaturunterschiede zwischen dem Ausgleichsgefäß 6 und dem Laserrohr 15 auftreten können.

In einer Ausführungsform gemäß FIG 3 ist ein relativ großes, auch als Vorratsgefäß dienendes Druckausgleichsgefäß 7 über mehrere Ausgleichsleitungen 4 mit einem Entladungskanal 3 in einem Laserrohr 19 verbunden. Um bei Temperaturschwankungen mechanische Spannungen zwischen dem Druckausgleichsgefäß 7 und dem Laserrohr 19 zu vermeiden, sind die Ausgleichsleitungen 4 flexibel gestaltet. Hierzu besteht beispielsweise das Druckausgleichsgefäß 7 aus Metall, wobei dünne Kupferrohre als Ausgleichsleitungen 4 eingesetzt sind und als Übergang zum Laserrohr 19, welches aus Keramik bestent, ein Ring 11 dient, der aus einem im Temperaturausdehnungskoeffizienten an den der Keramik angepaßten und relativ starren Material, beispielsweise Vacon, besteht. Dieser Aufbau gewährleistet in vielen Fällen eine ausreichende Verformbarkeit der Ausgleichsleitungen 4 bei Temperaturschwankungen. Falls die Verformbarkeit der angegebenen Anordnung nicht ausreicht, empfiehlt sich die Verwendung eines Faltenbalges 12, welcher wiederum an einem Ring 11 aus Vacon ansetzen kann und mit dem Ausgleichsgefäß 7 vakuumdicht verbunden ist, beispielsweise durch Löten oder Schweißen. Als Material für das Ausgleichsgefäß kann auch Glas eingesetzt werden, wobei in diesem Fall die Ausgleichsleitung 4 zweckmäßig aus einem Vaconring und einem Kupferrohr zusammengesetzt ist, da sich Vacon besonders gut über eine Glasverschmelzung mit einem gläsernen Vorratsgefäß verbinden läßt.

Eine gute Bedämpfung der in der Praxis auftretenden mechanischen oder akustischen Schwingungen wir erreicht, indem auf je etwa 80mm Länge des Entladungskanals 3 eine Ausgleichsleitung 4 angebracht ist. Bei einer Gesamtlänge von beispielsweise 600mm sind zweckmäßigerweise sieben Ausgleichsleitungen 4 angebracht.

## Patentansprüche

1. Wellenleiterlaser, welcher einen mit Lasergas gefüllten Entladungskanal in einem Laserrohr und ein mit diesem verbundenes Vorratsgefäß enthält, welches mit dem Entladungskanal über Rohrleitungen in Verbindung steht, **dadurch gekennzeichnet,** daß der Laser für eine Ansteuerung mit elektrischen Impulsen vorgesehen ist, daß diese Impulse zur Anregung von mechanischen bzw. akustischen Plasmaschwinungungen in Form stehender Wellen geeignet sind, daß der Laser zumindest ein Druckausgleichsgefäß enthält, welches mit dem Entladungskanal über zumindest eine Ausgleichsleitung in Verbindung steht und daß diese Ausgleichsleitung in den Entladungskanalbereich eines Druckbauches einer zu erwartenden stehenden Welle einmündet.

2. Wellenleiterlaser nach Anspruch 1, **dadurch gekennzeichnet,** daß das Druckausgleichsgefäß zwei oder mehr Ausgleichsleitungen besitzt.

3. Wellenleiterlaser nach Anspruch 2, **dadurch gekennn- zeichnet,** daß die Ausgleichsleitungen in verschiedenen Druckbäuchen von zu erwartenden stehenden Wellen in den Entladungskanal einmünden.

4. Wellenleiterlaser nach Anspruch 1, **dadurch gekennzeichnet,** daß das Vorratsgefäß als Druckausgleichsgefäß ausgebildet ist.

5. Wellenleiterlaser nach Anspruch 1, **dadurch gekennzeichnet,** daß zwei oder mehr Druckausgleichsgefäße vorgesehen sind und daß jedes von diesen über nur eine Ausgleichsleitung mit dem Entladungskanal verbunden ist.

6. Wellenleiterlaser nach Anspruch 2, **dadurch gekennzeichnet,** daß zumindest ein Teil der Ausgleichsleitungen verformbar gestaltet ist und daß die Verformbarkeit eine die Laserleistung störende Verbiegung der Kapillare auch bei den zu erwartenden Temperaturschwankungen vermeidet.

7. Wellenleiterlaser nach Anspruch 6, **dadurch gekennzeichnet,** daß die Ausgleichsleitung einen Faltenbalg enthält.

8. Wellenleiterlaser nach Anspruch 6, **dadurch gekennzeichnet,** daß die Ausgleichsleitung aus duktilem Material, insbesondere Kupfer besteht und für die erforderliche Duktilität ausreichend dünnwandig ausgebildet ist.

9. Wellenleiterlaser nach Anspruch 1, **dadurch gekennzeichnet,** daß der Entladungskanal in einem Laserrohr mit einem im wesentlichen rechteckförmigen Profil untergebracht ist, das an das Laserrohr im Bereich des Entladungskanals beidseitig, einander gegenüberliegend Kühlkanäle angrenzen, daß die Berührungsflächen zwischen den Kühlkanälen und dem Laserrohr den Entladungskanal beidseitig überragen und daß noch im Laserrohr Ausgleichsleitungen und daran angrenzend ein oder mehrere Ausgleichsgefäße untergebracht sind.

10. Wellenleiterlaser nach Anspruch 1, **dadurch gekennzeichnet,** daß der Entladungskanal in einem Laserrohr mit einem im wesentlichen rechteckförmigen Profil untergebracht ist, daß an dieses Laserrohr einander gegenüberliegend Kühlrohre angrenzen, deren Berührungsflächen zum Laserrohr den Entladungskanal beidseitig überragen, daß noch im Laserrohr Ausgleichsleitungen untergebracht sind und daß an das Laserrohr angrenzend eine oder mehrere Druckausgleichsgefäße angeordent sind, welche Öffnungen enthalten, die mit den Ausgleichsleitungen in Verbindung stehen und gegenüber der Umgebung vakuumdicht abgeschlossen sind.

11. Wellenleiterlaser nach einem der Ansprüche 1 bis 10, **dadurch gekennzeichnet,** daß der Entladungskanal rechteckförmig oder quadratisch gestaltet ist, daß die Ausgleichsleitungen an einer Seitenwand des Entladungskanals ansetzen und daß die Begrenzung der Ausgleichsleitungen nicht bis an den Rand dieser Seitenwand heranreichen.

12. Wellenleiterlaser nach einem der Ansprüche 1 bis 11, **dadurch gekennzeichnet,** daß an das Laserrohr auf je etwa 80mm Länge eine Ausgleichsleitung angebracht ist und daß der Laser für einen Betriebsdruck von etwa 110mbar vorgesehen ist.

## FIG 1

## FIG 2

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 700 294   (SIEMENS)<br>* Zusammenfassung; Abbildungen 1-4 *<br>– – – | 1 | H 01 S 3/03 |
| A | PATENT ABSTRACTS OF JAPAN, Band 7, Nr. 17 (E-154)[1162], 22. Januar 1983;<br>& JP-A-57 173 989 (NIHON SERIGAISEN KOGYO) 26-10-1982<br>* Vollständig *<br>– – – | 1,11 | |
| A | EP-A-0 085 948   (CGE)<br>* Seite 1; Abbildungen 1-5 *<br>– – – | 1-8,11 | |
| A | DE-A-3 327 257   (L.V. SUTTER, Jr.)<br>* Seite 16; Abbildungen 6,7 *<br>– – – – – | 9-11 | |

**RECHERCHIERTE SACHGEBIETE (Int. Cl.5)**

H 01 S

Der vorliegende Recherchenbericht wurde für alle Patentansprüche erstellt

| Recherchenort | Abschlußdatum der Recherche | Prüfer |
|---|---|---|
| Den Haag | 25 Juni 91 | MALIC K. |